# EUROPEAN PATENT SPECIFICATION

(11) **EP 0 985 481 B1**
(45) Date of publication and mention of the grant of the patent: **25.10.2006**
(21) Application number: 99116920.2
(22) Date of filing: 27.08.1999
(51) Int. Cl.: B23D 49/16, B27B 9/02

(54) **Jig saw and dual position shoe**
Dekupiersäge mit Zweifachpositionierunsführungsschuh
Scie sauteuse à plaque de guidage à double position

(30) Priority: 11.09.1998 GB 9819743
(43) Date of publication of application: 15.03.2000
(73) Proprietor: Black & Decker Inc., Newark, DE 19711 (US)
(72) Inventor: Laverick, Ray, Bishop Auckland, County Durham DL14 6AH (GB)
(74) Representative: Shaya, Darrin Maurice

(56) References cited:
- DE-A- 1 403 691
- DE-A- 3 922 849
- DE-U- 1 994 143
- US-A- 2 544 461
- US-A- 2 839 101
- US-A- 3 078 885
- US-A- 3 262 472
- US-A- 3 938 251

## Description

The present invention relates to a saw according to the preamble of claim 1, in particular a powered saw, for example a jig saw or circular saw, with improved bevel facility.

Such a saw is known from US 2558829 A1.

A jig saw is used for cutting shapes, including curves and other complex shapes, from wood, metal, plastics and other materials. The saw generally comprises a housing from which an elongated blade extends at an angle substantially perpendicular to the base of the housing. The blade is mounted for longitudinal reciprocal movement and is driven by a motor located in the housing. The base of the housing is generally not flat, so that, for accurate cutting, a plate, known as a shoe, is mounted on the base of the housing. The shoe includes a planar surface, the angle of which may be adjustable with respect to the base of the housing but which can at least be secured substantially parallel to the base of the housing and therefore perpendicular to the direction of movement of the blade.

In use, the saw is held with the planar surface of the shoe in contact with the surface of the workpiece and the user guides the saw around the outline of the shape to be cut.

Known jig saws are designed either to be used to cut at a single predetermined angle of 90° to the surface of the workpiece or are provided with a shoe which can be adjusted to give any desired angle of cut over a certain range.

Surveys of users of jig saws have shown that these saws are most often used at the angle of 90°, and are occasionally used at a bevel angle of 45°. It is rare for a saw to be used at any other bevel angle, although when selecting a saw, a purchaser is likely to select one which has this additional facility, especially where the additional cost is minor. However, users of saws do complain that they have difficulty in setting the saw both exactly at 90° and exactly at 45°, which are of course the preferred settings.

Similar features are provided on powered circular saws, with similar results from user surveys.

US 2544461 discloses a saw attachment for drills in which a frame carrying a saw is pivotable relative to a base and can be clamped at any position between its extremes of pivotal movement.

It is an object of the present invention to provide a saw in which the above disadvantages are reduced or substantially obviated.

According to the present invention, there is provided a saw, according to claim 1, which comprises a housing, a motor, a blade and a shoe adapted to be mounted on the housing, wherein the shoe is movable between a first predetermined position in which a planar guide surface of the shoe is set at a first predetermined angle to the plane of movement of the blade and a second predetermined position in which a planar guide surface of the shoe is set at a second predetermined angle to the plane of movement of the blade, characterised by at least one first abutment surface on the housing, at least one second abutment surface on the shoe, and at least one third abutment surface on the shoe, wherein said shoe is located in said first predetermined position by means of abutment of at least one said first abutment surface with at least one said second abutment surface, and said shoe is located in said second predetermined position by means of abutment of at least one said first abutment surface with at least one said third abutment surface.

In a preferred embodiment of a saw according to the invention, the first predetermined angle is 90° and the second predetermined angle is 45°.

It is particularly preferred that the saw is a powered saw, in particular a circular saw or a jigsaw.

A preferred embodiment of jigsaw will now be described with reference to the accompanying drawings, in which;

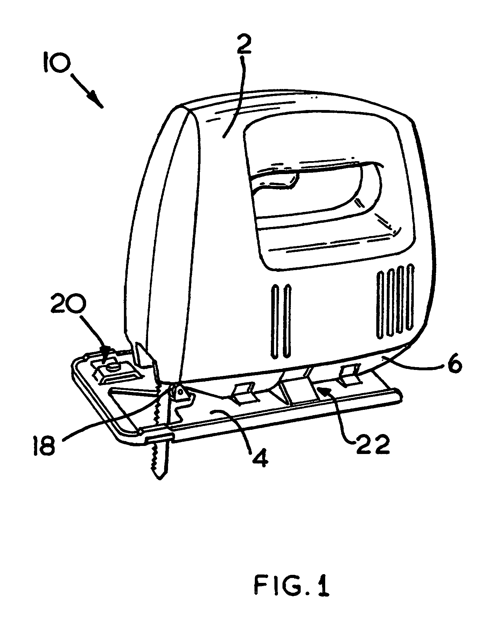

Figure 1 is a view of a jigsaw with a shoe attached;

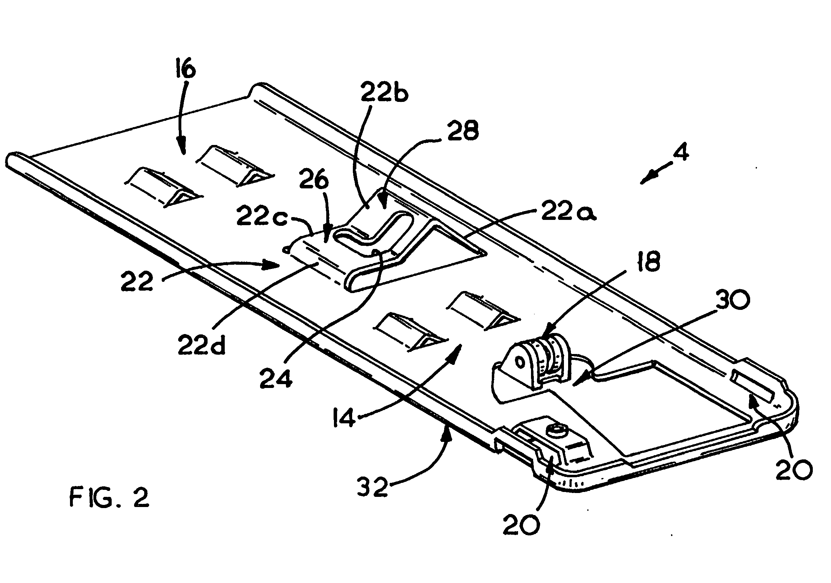

Figure 2 is a perspective view of the shoe of Figure 1;
Figure 3 is a sectional view of a jigsaw with the shoe attached for 90° cutting; and
Figure 4 is a sectional view of a jigsaw with the shoe attached for 45° cutting.

A jigsaw shown generally at 10 comprises a housing 2 of clamshell construction. A one piece shoe 4 is attached to the base 6 of the jigsaw 10 by means of a clamping screw 8 which engages in a clamping nut 12 located in the housing 2.

The shoe 4 is of one piece construction and comprises first and second location features 14,16 for location in corresponding location recesses in the housing 2. The shoe 4 is further provided with a blade support roller 18 and fence guide location features 20.

The shoe 4 is made of metal and is substantially rectangular in form, and is formed from a flat blank. A central area 22 of the blank is deformed by pressing into a stepped shape comprising a first surface 22a inclined at an angle of 45° to the original surface; a second inclined surface 22b inclined at 90° to the first surface 22a and shorter than the surface 22a; a third surface 22c substantially parallel to and vertically spaced from the original surface and a fourth return surface 22d.
An L-shaped aperture 24 is provided in the central stepped area 22 and comprises a first location face 26 and a second location face 28, located respectively at each end of the aperture 24.

A second aperture 30 is provided adjacent the blade support roller 18 to allow the blade to pass through the shoe.

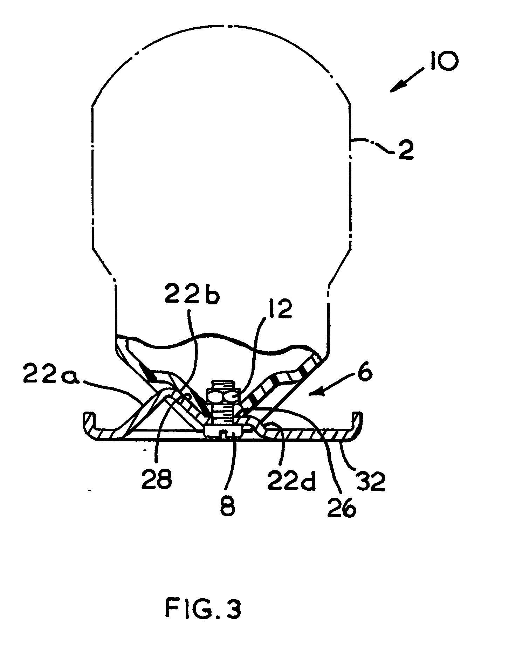

In operation, for 90° cutting, the shoe 4 is clamped to the housing 2 with the clamping screw 8 contacting the first location face 26. The blade (not shown) is supported by the blade support roller 18. This configuration can be seen most clearly from Figure 3. As can be seen from Figure 3, the major surface 32 of the shoe 4 is substantially perpendicular to the blade, allowing the user to cut a 90° cut.

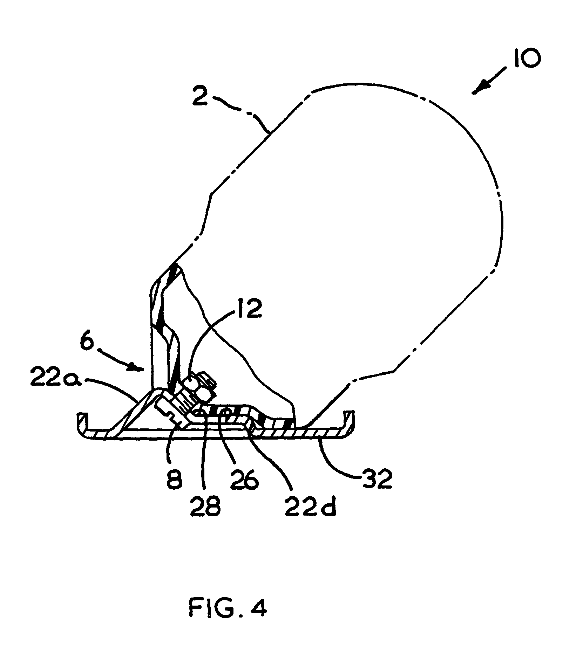

In order to convert the saw to 45° cutting, the screw 8 is released by turning 5 or 6 turns, and the shoe is moved backwards relative to the blade and then rotated by 45° relative to the blade. The screw 8 is then tightened again, and is in contact with the second location face 28. In this configuration, which can be seen most clearly in Figure 4, the blade is not supported by the blade support roller 18. As can be seen from Figure 4, the planar guide surface 32 of the shoe 4 is at substantially 45° to the blade, allowing the user to cut a 45° cut.

## Claims

1. A saw (10) which comprises a housing (2), a motor, a blade and a shoe (4) adapted to be mounted on the housing (2), wherein the shoe (4) is movable between a first predetermined position in which a planar guide surface (32) of the shoe (4) is set at a first predetermined angle to the plane of movement of the blade and a second predetermined position in which a planar guide surface (32) of the shoe (4) is set at a second predetermined angle to the plane of movement of the blade, **characterized by** at least one first abutment surface on the housing, at least one second abutment surface (26) on the shoe, and at least one third abutment surface (25) on the shoe, wherein said shoe is located in said first predetermined position by means of abutment of at least one said first abutment surface with at least one said second abutment surface, and said shoe is located in said second predetermined position by means of abutment of at least one said first abutment surface with at least one said third abutment surface.

2. A saw according to claim 1 **characterised in that** the first predetermined angle is 90°.

3. A saw according to claim 1 or claim 2 **characterised in that** the second predetermined angle is 45°.

4. A saw according to any of claims 1 to 3 **characterised in that** the saw is a circular saw.

5. A saw according to any of claims 1 to 3 **characterised in that** the saw is a jig saw.

6. A saw according to claim 5 **characterised in that** the shoe (4) is formed from a single piece of metal.

7. A saw according to any of claims 1 to 6 **characterised in that** the shoe (4) is mounted on the housing (2) by means of a clamping screw (8) which engages in a clamping nut (12) located in the housing (2).

8. A saw according to any of claims 1 to 7 **characterised in that** the shoe (4) further comprises a blade support roller (18).

## Patentansprüche

1. Säge (10) mit einem Gehäuse (2), einem Motor, einem Blatt und einem zur Befestigung am Gehäuse (2) angepassten Schuh (4), der zwischen einer ersten vorbestimmten Stellung, in der sich eine ebene Führfläche (32) des Schuhs (4) unter einem ersten vorbestimmten Winkel zur Ebene der Bewegung des Blattes befindet, und einer zweiten vorbestimmten Stellung bewegbar ist, in der sich eine ebene Führfläche (32) des Schuhs (4) unter einem zweiten vorbestimmten Winkel zur Ebene der Bewegung des Blattes befindet, **gekennzeichnet durch** mindestens eine erste Anlagefläche am Gehäuse, mindestens eine zweite Anlagefläche (26) am Schuh und mindestens eine dritte Anlagefläche (25) am Schuh, wobei sich der Schuh **durch** Anlage der mindestens einen ersten Anlagefläche an der mindestens einen zweiten Anlagefläche in der ersten Stellung befindet und der Schuh sich **durch** Anlage der mindestens einen ersten Anlagefläche an der mindestens einen dritten Anlagefläche in der zweiten vorbestimmten Stellung befindet.

2. Säge nach Anspruch 1, **dadurch gekennzeichnet, dass** der erste vorbestimmte Winkel 90° ist.

3. Säge nach Anspruch 1 oder 2, **dadurch gekennzeichnet, dass** der zweite vorbestimmte Winkel 45° ist.

4. Säge nach einem der Ansprüche 1 bis 3, **dadurch gekennzeichnet, dass** die Säge eine Kreissäge ist.

5. Säge nach einem der Ansprüche 1 bis 3, **dadurch gekennzeichnet, dass** die Säge eine Stichsäge ist.

6. Säge nach Anspruch 5, **dadurch gekennzeichnet, dass** der Schuh (4) aus einem einzigen Metallstück geformt ist.

7. Säge nach einem der Ansprüche 1 bis 6, **dadurch gekennzeichnet, dass** der Schuh mittels einer Klemmschraube (8) am Gehäuse (2) befestigt ist, die in Eingriff mit einer im Gehäuse (2) angeordneten Klemmmutter (12) steht.

8. Säge nach einem der Ansprüche 1 bis 7, **dadurch gekennzeichnet, dass** der Schuh (4) ferner eine Blattstützrolle (18) aufweist.

## Revendications

1. Scie (10) qui comprend un boîtier (2), un moteur, une lame et un sabot (4) adapté pour être monté sur le boîtier (2), dans laquelle le sabot (4) peut être déplacé entre une première position prédéterminée dans laquelle une surface de guidage plane (32) du sabot (4) est placée au niveau d'un premier angle prédéterminé par rapport au plan de déplacement de la lame et une seconde position prédéterminée dans laquelle une surface de guidage plane (32) du sabot (4) est placée au niveau d'un second angle prédéterminé par rapport au plan de déplacement de la lame, **caractérisée par** au moins une première surface de butée sur le boîtier, au moins une deuxième surface de butée (26) sur le sabot, et au moins une troisième surface de butée (25) sur le sabot, dans laquelle ledit sabot est situé dans ladite première position prédéterminée au moyen de la butée d'au moins une dite première surface de butée avec au moins une dite deuxième surface de butée, et ledit sabot est situé dans ladite seconde position prédéterminée au moyen de la butée d'au moins une dite première surface de butée avec au moins une dite troisième surface de butée.

2. Scie selon la revendication 1 **caractérisée en ce que** le premier angle prédéterminé est de 90 °.

3. Scie selon la revendication 1 ou la revendication 2 **caractérisée en ce que** le second angle prédéterminé est de 45 °.

4. Scie selon l'une quelconque des revendications 1 à 3 **caractérisée en ce que** la scie est une scie circulaire.

5. Scie selon l'une quelconque des revendications 1 à 3 **caractérisée en ce que** la scie est une scie sauteuse.

6. Scie selon la revendication 5 **caractérisée en ce que** le sabot (4) est formé à partir d'une seule pièce de métal.

7. Scie selon l'une quelconque des revendications 1 à 6 **caractérisée en ce que** le sabot (4) est monté sur le boîtier (2) au moyen d'une vis de blocage (8) qui se met en prise dans un écrou de serrage (12) situé dans le boîtier (2).

8. Scie selon l'une quelconque des revendications 1 à 7 **caractérisée en ce que** le sabot (4) comprend en outre un galet de support de lame (18).
